(19) **Europäisches Patentamt**
**European Patent Office**
**Office européen des brevets**

(11) **EP 1 775 860 B1**

(12) **EUROPEAN PATENT SPECIFICATION**

(45) Date of publication and mention
of the grant of the patent:
**02.07.2008 Bulletin 2008/27**

(51) Int Cl.:
***H04B 10/155*** *(2006.01)*

(21) Application number: **05022460.9**

(22) Date of filing: **14.10.2005**

(54) **Optical single sideband modulator**

Optischer Einseitenbandmodulator

Modulateur optique à bande latérale unique

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**18.04.2007 Bulletin 2007/16**

(73) Proprietor: **Nokia Siemens Networks GmbH & Co. KG**
**81541 München (DE)**

(72) Inventors:
• **Monteiro, Paulo**
**3830-209 Ilhavo (PT)**
• **Silveira, Tiago**
**3780-523 Sangalhos (PT)**

• **Teixeira, Antonio**
**3830-000 Ilhavo (PT)**

(56) References cited:
**US-A- 5 532 857** **US-A- 6 115 162**
**US-A1- 2002 171 900**

• **LEE U-S ET AL: "OPTICAL SINGLE SIDEBAND SIGNAL GENERATION USING PHASE MODULATION OF SEMICONDUCTOR OPTICAL AMPLIFIER" IEEE PHOTONICS TECHNOLOGY LETTERS, IEEE SERVICE CENTER, PISCATAWAY, NJ, US, vol. 16, no. 5, May 2004 (2004-05), pages 1373-1375, XP001212232 ISSN: 1041-1135**

EP 1 775 860 B1

**Description**

The invention relates to an optical single sideband modulator according to claim 1.

BACKGROUND OF THE INVENTION

Optical single sideband modulation OSSB has three important advantages in optical communications compared with double sideband modulation:

- OSSB systems most obvious advantage is the reduction of spectral occupancy and therefore the increased number of transmission channels in a wavelength multiplex signal compared with conventional systems,
- OSSB systems have higher tolerance to chromatic dispersion introduced by the optical transmission fiber,
- OSSB systems allow electrical compensation and electrical precompensation.

The most common generation of OSSB signals is performed by an optical modulator generating a double sideband signal. The double sideband modulated signal is fed to an optical filter to suppress one sideband.
This arrangement is expensive and is unable to obtain a good suppression of one sideband without attenuating the optical carrier. Further it has the disadvantage that information can be lost if the filter or laser is detuned.
In IEEE Photonic Technology Letters, Vol. 16, No. 5 May 2004(2004-05), pages 1373-1375; XP001212232, ISSN 1041-1135 Lee et al. describe a single sideband generator using a semiconductor amplifier. A first carrier wave is modulated by a RF frequency and a second adjustable carrier wave is modulated by a phase shifted RF frequency. Chirp, SPM and XPM are combined to generate a single sideband signal. This arrangement is designed for RF tone frequencies but dies not work for high data rate digital data signals

SUMMARY OF THE INVENTION

It is an object of the invention to provide a low cost optical single sideband modulator for binary data signals without wavelength stability problems.
According to the present invention the optical single sideband modulator includes an amplitude modulator and a semiconductor optical amplifier [SOA], using a chirp effect to convert an amplitude modulated optical signal into a single sideband signal without the help of a filter for eliminating one of the sidebands.
The optical single sideband generator can be easily adapted to different bit rates by controlling the power of a modulated optical signal, which is fed to the SOA, or the operating voltage.
The main advantage of the invention is that the carrier is not suppressed and no information loss according to detuning of a sideband suppression filter results in a loss of information.

DESCRIPTION OF THE DRAWINGS

Fig. 1 shows the first preferred embodiment of the optical single sideband modulator,
Fig. 2 shows a second preferred embodiment of a converter,
Fig. 3 shows a modulated double sideband and a single sideband signal,
Fig. 4 shows the eye opening for double and single sideband modulation,
Fig. 5 shows a system with a separate double sideband/single sideband converter.

DESCRIPTION OF PREFERRED EMBODIMENTS

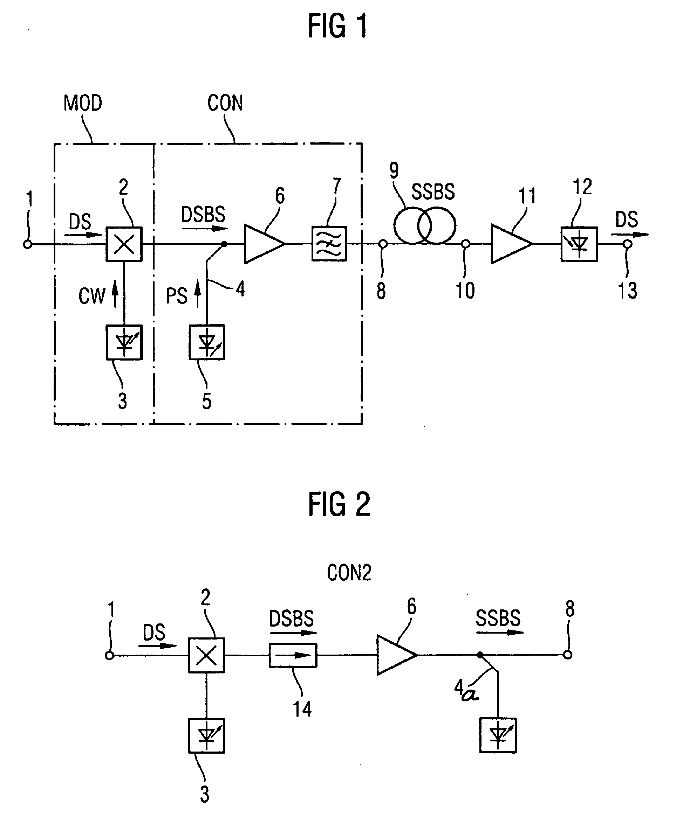

**Fig. 1** shows a single sideband modulator comprising an optical am modulator MOD/2,3 (amplitude modulation), e.g. Mach-Zehnder modulator, and an ODSB-OSSB converter CON/4,5,6 (optical double sideband - optical single sideband) connected in series.
A binary data signal DS is fed to a signal input 1 of the modulator device 2, which receives a CW (constant wavelength) signal from a laser 3 and outputs an optical amplitude modulated double sideband signal DSBS. This signal is combined with a pump signal PS generated by a pump source 5 in a coupler or a filter (wavelength multiplexer) 4 and passed to a signal input of a semiconductor optical amplifier (SOA) 6, which performs the ODSB-OSSB conversion. The pump signal PS is used to maintain the SOA in the saturated region.
The transfer function of the SOA can be described approximately by:

$$(1) \quad E_{out}(t) = E_{in}(t)e^{\dfrac{(1+j\alpha)\cdot\Gamma\cdot g(E_{in}(t))\cdot L - \alpha_s\cdot L}{2}}$$

Where $E_{in}$ is the optical field at the input, $E_{out}$ is the optical field at the output, $\alpha$ is a parameter known as the linewidth enhancement factor, g is gain of the SOA, which is dependent on the input optical field, L is the length of the SOA, r is the optical confinement factor and $\alpha_s$ describes the losses in the waveguide.

[According to Agrawal, G.P. Olsen; N.A. "Self-phase modulation and Spectral Broadening of Optical Pulses in Semiconductor Laser Amplifiers"; IEEE Journal of Quantum Electronics, Vol. 25, No. 11, November 1989]

According to the formula (1) a phase modulation occurs inside the SOA driven by the input signal. A positive chirp is caused by a "1" to "0" (on → off) transition and a negative chirp is the result of a "0" to "1" (off → on) transition. The negative chirp transfers some power from the upper sideband to the lower sideband and the positive chirp will transfer some power from the lower the upper sideband. Since the power of 1's is higher than the power of 0's and the negative chirp is higher than the positive chirp the power transition to the lower sideband is higher than the power transition to the higher sideband (due to the fact that gain depletion inn a SOA is faster than gain recovery). The result is an optical single sideband signal SSBS.

The pump signal PS is used to maintain the SOA in the saturation region, otherwise there would be an overshoot in the transitions, especially during 0 to 1 transitions. A band stop filter 7 connected with the output of SOA eliminates the Pump signal.

The signal SSBS is transmitted - usually after additional amplification; not shown) - from the converter output 8 over a fiber 10 to a receiver 11, 12. Of course, a plurality of OSSB signals can be combined to a (dense) wavelength division multiplex signal.

The received signal OSSB is fed to a signal input 10 of an amplifier 11 and an outputted amplified signal is then converted into the electrical data signal DS by an optical-electrical converter working as a demodulator 12. Of course, chromatic dispersion compensation and polarisation mode dispersion compensation can be used for further improving the signal quality of the received signal.

**Fig. 2** shows another preferred embodiment with a second converter CON2 of the single sideband modulator according to the invention. The SOA is pumped backwards over the coupler 4 by the pump source 5. A pump rejection filter is not necessary. An isolator (or an optical filter) 14, inserted before the signal input of the SOA, keeps the pump signal PS away from the modulator device 2.

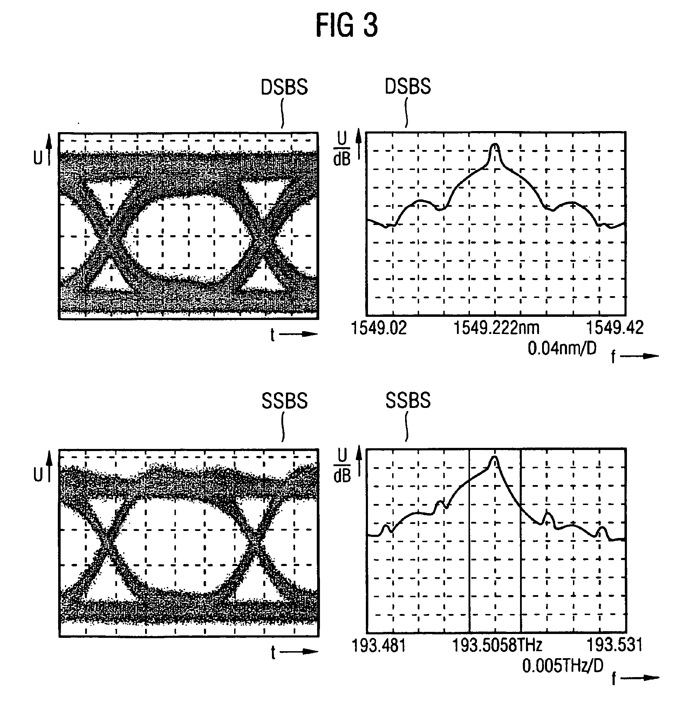

**Fig. 3** illustrates the difference between a double sideband signal DSBS at the SOA input (top) and the single sideband signal SSBS at the SOA/converter output (below) in the time domain [t] an in the frequency domain [f]. On the left side the vertical axis shows an appropriate output voltage of a demodulator and on the right side the vertical axis shows the output voltage U of a spectral analyser in dB. It can be seen that the upper sideband is highly reduced.

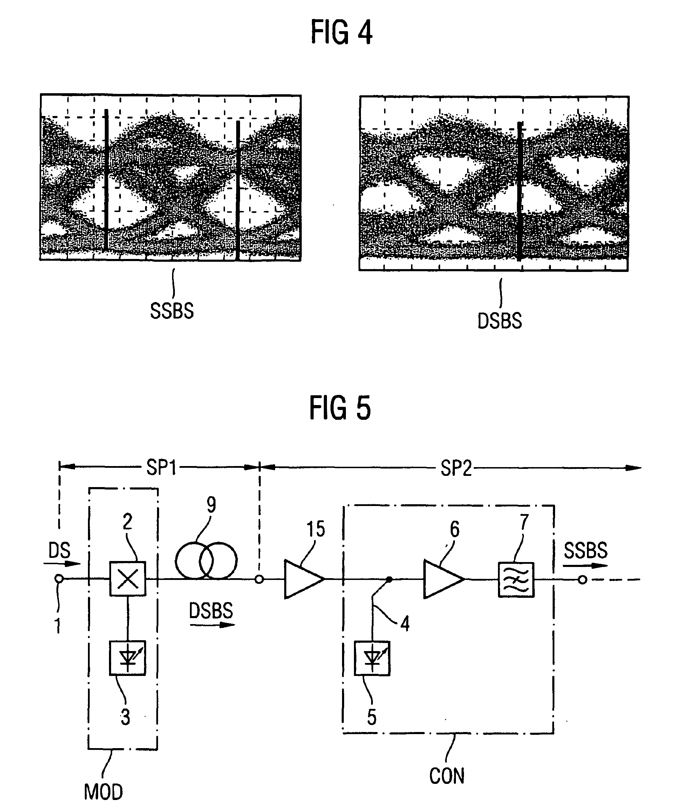

The improvement of single sideband modulation according to our invention becomes obvious from **Fig. 4**. On the left side the eye opening is shown for DSB signal DSBS and on the right side for our SSB signal SSBS after 80 km of fiber. Even after 160 km a high quality signal can be attained when SSB modulation according to the invention is used.

**Fig. 5** shows a composite transmission line. A normal ODSB signal is transmitted over a first span SP1 with e.g. 40 km. At end of this span (the beginning of the next span) the received signal is amplified by an EDFA span amplifier 15 and transformed the ODSB-OSSB converter CON into an OSSB signal, which is transmitted over a second span SP2. This solution is advantageous, when OSSB signals are received from third party lines. Beside the conversion into an OSSB signal a 2R regeneration is performed by the ODSB-OSSB converter: the received signals are amplified and the "1" impulses are shortened.

**Claims**

1. Single sideband modulator for binary data signals, comprising
   an optical amplitude modulator (2) for generating an optical amplitude modulated double sideband signal (DSBS) by modulating an optical carrier signal (CW) with a binary data signal (DS), fed to its modulation input,
   and an optical double sideband - optical single sideband converter (CON), connected in series with the optical amplitude modulator (2),
   the optical double sideband - optical single sideband converter (CON) comprising a semiconductor optical amplifier (6) having a signal input for receiving the double sideband signal (DSBS) outputted from the optical amplitude modulator (2), and comprising a pump source (5) for generating an optical pump signal (PS), which is also fed to the semiconductor optical amplifier (6) to keep it in a saturated region, so that the double sideband signal (DSBS) is converted to an optical single sideband modulated signal (OSSBS).

**2.** Single sideband modulator according to claim 1,
**characterised in that**
a coupler or filter (4), having a second input, is inserted between an output of the optical amplitude modulator (2) and the signal input of the semiconductor optical amplifier (6), and that the pump signal (PS) is fed to the second input of the coupler or filter (4), where it is combined with the optical double sideband signal (DSBS) and applied to the signal input of the semiconductor optical amplifier (6).

**3.** Single sideband modulator according to claim 1,
**characterised in that**
a coupler or filter (4a), having a second input, is connected to the output of the semiconductor optical amplifier (6) and that the pump signal (PS) is inputted at a second input of the coupler or filter (4) and fed backwards to the semiconductor optical amplifier (6).

**4.** Single sideband modulator according to claim 1,
**characterised in that**
the amplitude modulator (MOD) is positioned at the beginning of a transmission span (SP1) and the converter (CON) is positioned at the end of that transmission span (SP1).

**Patentansprüche**

**1.** Einseitenband-Modulator für binäre Datensignale, umfassend:

einen optischen Amplitudenmodulator (2) zum Erzeugen eines amplitudenmodulierten Zweiseitenbandsignals (DSBS) durch Modulieren eines optischen Trägersignals (CW) mit einem binären Datensignal (DS), das seinem Modulationseingang zugeführt wird, und
einen mit dem optischen Amplitudenmodulator (2) in Reihe geschalteten Umsetzer zwischen dem optischen Zweiseitenband und dem optischen Einseitenband (CON),
wobei der Umsetzer zwischen dem optischen 2weiseitenband und dem optischen Einseitenband (CON) einen optischen Halbleiterverstärker (6), der einen Signaleingang zum Empfangen des von dem optischen Amplitudenmodulator (2) ausgegebenen amplitudenmodulierten Zweiseitenbandsignals (DSBS) aufweist, und eine Pumpquelle (5) zum Erzeugen eines optischen Pumpsignals (PS) umfaßt, das auch dem optischen Halbleiterverstärker (6) zugeführt wird, um ihn in einer gesättigten Region zu halten, dergestalt, daß das Zweiseitenbandsignal (DSBS) in ein optisches moduliertes Einseitenbandsignal (OSSBS) umgesetzt wird.

**2.** Einseitenband-Modulator nach Anspruch 1, **dadurch gekennzeichnet, daß**
ein Koppler oder Filter (4) mit einem zweiten Eingang zwischen einem Ausgang des optischen Amplitudenmodulators (2) und dem Signaleingang des optischen Halbleiterverstärkers (6) eingefügt ist und daß das Pumpsignal (PS) dem zweiten Eingang des Kopplers oder Filters (4) zugeführt wird und dort mit dem optischen Zweiseitenbandsignal (DSBS) kombiniert und an den Signaleingang des optischen Halbleiterverstärkers (6) angelegt wird.

**3.** Einseitenband-Modulator nach Anspruch 1, **dadurch gekennzeichnet, daß**
ein Koppler oder Filter (4a) mit einem zweiten Eingang mit dem Ausgang des optischen Halbleiterverstärkers (6) verbunden ist und daß das Pumpsignal (PS) an einem zweiten Eingang des Kopplers oder Filters (4) eingegeben und rückwärts dem optischen Halbleiterverstärker (6) zugeführt wird.

**4.** Einseitenband-Modulator nach Anspruch 1, **dadurch gekennzeichnet, daß**
der Amplitudenmodulator (MOD) am Anfang eines Übertragungsabschnitts (SP1) angeordnet ist und der Umsetzer (CON) am Ende dieses Übertragungsabschnitts (SP1) angeordnet ist.

**Revendications**

**1.** Modulateur à bande latérale unique pour signaux de données binaires, comprenant
un modulateur d'amplitude optique (2) pour générer un signal à bande latérale double (DSBS) modulé en amplitude optique en modulant un signal porteur optique (CW) avec un signal de données binaire (DS) qui alimente son entrée de modulation
et un convertisseur bande latérale double optique - bande latérale unique optique (CON) branché en série avec le modulateur d'amplitude optique (2),
le convertisseur bande latérale double optique - bande latérale unique optique (CON) comprenant un amplificateur optique semi-conducteur (6) pourvu d'une entrée de signal destinée à recevoir le signal à bande latérale double (DSBS) délivré par le modulateur d'amplitude optique (2),
et comprenant une source de pompe (5) pour générer un signal de pompe optique (PS) qui alimente également l'amplificateur optique semi-conducteur (6) pour le maintenir dans une zone saturée de manière à ce que le signal à bande latérale double (DSBS) soit converti en un signal modulé à bande latérale unique optique (OSSBS).

**2.** Modulateur à bande latérale unique selon la revendication 1, **caractérisé en ce que**
un coupleur ou filtre (4), pourvu d'une seconde entrée, est inséré entre une sortie du modulateur d'amplitude optique (2) et l'entrée de signal de l'amplificateur optique semi-conducteur (6) et **en ce que** le signal de pompe (PS) alimente la seconde entrée du coupleur ou filtre (4), où il est combiné au signal à bande latérale double optique (DSBS) et appliqué à l'entrée de signal de l'amplificateur optique semi-conducteur (6).

**3.** Modulateur à bande latérale unique selon la revendication 1, **caractérisé en ce que**
un coupleur ou filtre (4a), pourvu d'une seconde entrée, est connecté à la sortie de l'amplificateur optique semi-conducteur (6) et **en ce que** le signal de pompe (PS) est entré au niveau d'une seconde entrée du coupleur ou filtre (4) et réinjecté dans l'amplificateur optique semi-conducteur (6).

**4.** Modulateur à bande latérale unique selon la revendication 1, **caractérisé en ce que**
le modulateur d'amplitude (MOD) est positionné au début d'une distance de transmission (SP1) et le convertisseur (CON) est positionné à la fin de cette distance de transmission (SP1).

## FIG 1

## FIG 2

# FIG 3

DSBS          DSBS

U $\frac{U}{dB}$

t →          1549.02      1549.222nm      1549.42

0.04nm/D  f →

SSBS          SSBS

U $\frac{U}{dB}$

t →          193.481      193.5058THz      193.531

0.005THz/D  f →

# FIG 4

SSBS

DSBS

# FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEE.** IEEE Photonic Technology Letters. 05 May 2004, vol. 16, 1373-1375

- **AGRAWAL, G.P. ; OLSEN; N.A.** Self-phase modulation and Spectral Broadening of Optical Pulses in Semiconductor Laser Amplifiers. *IEEE Journal of Quantum Electronics,* November 1989, vol. 25 (11